# EUROPÄISCHE PATENTANMELDUNG

(11) **EP 1 229 072 A1**
(43) Veröffentlichungstag der Anmeldung: **07.08.2002**
(21) Anmeldenummer: 02001033.6
(22) Anmeldetag: 18.01.2002
(51) Int. Cl.: C08K 5/00, C08L 9/06

(54) **Terpolymere enthaltende Kautschukmischungen**

(30) Priorität: 31.01.2001 DE 10104236
(71) Anmelder: BAYER AG, 51368 Leverkusen (DE)
(72) Erfinder: Rawlinson, Adrian, 51375 Leverkusen (DE); Engehausen, Rüdiger, Dr., 41539 Dormagen (DE); Wendling, Peter, 51375 Leverkusen (DE)

(57) **Zusammenfassung**

Die Erfindung betrifft Kautschukmischungen enthaltend wenigstens ein NSBR-Terpolymer und wenigstens einen polaren synthetischen Weichmacher, ein Verfahren zur deren Herstellung sowie die Verwendung zur Herstellung von Kautschukformkörpern aller Art.

## Beschreibung

Die Erfindung betrifft Kautschukmischungen enthaltend Terpolymere auf Basis eines ungesättigten olefinischen Nitrils, einer vinylaromatischen Verbindung und einem konjugierten Dien sowie wenigstens einen polaren synthetischen Weichmacher. Die erfindungsgemäßen Kautschukmischungen können zur Herstellung von Kautschukformkörpern, insbesondere Reifen, verwendet werden.

Es ist bekannt, durch Verwendung von Terpolymeren auf Basis eines konjugierten Diolefins, einer vinylaromatischen Verbindung und eines olefinisch ungesättigten Nitrils, die Nassrutschfestigkeit und die Abriebfestigkeit zu verbessern. Verwiesen wird in diesem Zusammenhang beispielsweise auf EP-A 537 640, US-A 5 310 815, US-A 5 225 479. DE-A 3 837 047 und EP-A 0 736 399. In diesen Patentveröffentlichungen wird darüber hinaus erwähnt, dass man die dort offenbarten Terpolymere mit anderen Kautschuken abmischen kann, wobei diesen Mischungen die üblichen Kautschukhilfsmittel zugesetzt werden können. Unter den verschiedensten Kautschukhilfsmitteln werden Weichmacher als in üblicher Weise einzusetzende Hilfsmittel ebenfalls beschrieben.

Die in den genannten Patentveröffentlichungen beschriebenen Terpolymere bzw. deren Mischungen mit anderen Kautschuken sind allerdings noch verbesserungswürdig im Hinblick auf dynamische Eigenschaften, wie dynamischer Modul bei niedrigen Temperaturen, und der Kombination der Eigenschaften von Rollwiderstand, Nassrutschfestigkeit und Abrieb.

Es ist bekannt, dass Ruß- oder Kieselsäure-enthaltende Laufflächenmischungen auf Basis von unpolaren Kautschuken oder Mischungen derselben enthaltend NSBR zu einer deutlichen Erhöhung des tan δ-Wertes bei 0°C führen, was eine verbesserte Nassrutschfestigkeit anzeigt. Auch wird, abhängig von der jeweiligen Kautschukmischung eine verbesserte Abriebsfestigkeit gefunden. Jedoch zeigt die Verwendung von NSBR in solchen Mischungen auch negative Effekte, wie deutlich erhöhter dynamischer Modul bei 0°C und erhöhten tan δ-Wert bei 60°C. Eine Reifenlaufflächenmischung mit einem hohen dynamischen Modul bei 0°C hat jedoch Nachteile bei niedrigen Temperaturen bezüglich des ABS-Bremsverhaltens bei Nässe sowie beim Fahrverhalten. Auch weist ein hoher tan δ-Wert bei 60°C auf einen höheren Rollwiderstand hin.

Aufgabe der vorliegenden Erfindung ist es nun, Kautschukmischungen auf Basis von Terpolymeren der erwähnten Zusammensetzung zur Verfügung zu stellen, die verbesserte dynamische Eigenschaften, wie dynamischer Modul bei niedrigen Temperaturen, sowie eine verbesserte Kombination der Eigenschaften von Rollwiderstand, Nassrutschverhalten und Abriebfestigkeit aufweisen.

Die Aufgabe wird dadurch gelöst, dass man den Terpolymeren enthaltenden Kautschukmischungen polare synthetische Weichmacher zusetzt.

Gegenstand der vorliegenden Erfindung sind daher Kautschukmischungen enthaltend
a) wenigstens ein aus einem olefinisch ungesättigten Nitril, einer vinylaromatischen Verbindung und einem konjugierten Dien bestehenden Terpolymer (NSBR)
   und
b) wenigstens einen polaren synthetischen Weichmacher,
wobei die Komponente b) in Mengen von 0,5 bis 50 Gew.-%, bezogen auf die Menge des Terpolymeren (a), vorhanden ist.

Bevorzugt sind Kautschukmischungen, in denen die Komponente b) in Mengen von 5 bis 40 Gew.-%, insbesondere 10 bis 30 Gew.-%, jeweils bezogen auf die Menge des Terpolymeren (a) vorhanden ist.

Das als Komponente a) in die erfindungsgemäßen Kautschukmischungen eingesetzte Terpolymer basiert - wie erwähnt - auf ungesättigten olefinischen Nitrilen, vinylaromatischen Verbindungen und konjugierten Dienen.

Als konjugierte Diene kommen insbesondere in Frage: 1,3-Butadien, 2,3-Dimethyl, 1,3-Butadien, 2-Methyl-1,3-Butadien, 2-Ethyl-1,3-Butadien, 1,3-Pentadien, 2-Methyl-1,3-Pentadien, 1,3-Hexadien, 2-Phenyl-1,3-Butadien, 3,4-Dimethyl-1,3-Hexadien, 1,3-Heptadien, 1,3-Octadien, 4,5-Diethyl-1,3-Octadien, 3-Methyl-1,3-Pentadien, 4-Methyl-1,3-Pentadien oder Mischungen der genannten Diene. Bevorzugt werden als konjugierte Diene eingesetzt: 1,3-Butadien und 2-Methyl-1,3-Butadien, insbesondere 1,3-Butadien.

Als vinylaromatische Verbindungen werden solche genannt, die 8 bis 16 Kohlenstoffatome im Molekül enthalten, wie Styrol, α-Methylstyrol, 2-Methylstyrol, 3-Methylstyrol, 4-Methylstyrol, 4-Cyclohexylstyrol, 4-p-Toluolstyrol, p-Chlorstyrol, p-Bromstyrol, 4-tert.-Butylstyrol, 1-Vinylnaphthalen, 2-Vinylnaphthalen oder Mischungen derselben, wobei Styrol bevorzugt ist.

Als olefinisch ungesättigte Nitrile können zum Aufbau der Terpolymere eingesetzt werden Acrylnitril, Methacrylnitril, Ethylacrylnitril, Crotonnitril, 2-Pentennitril oder Mischungen derselben, wobei Acrylnitril bevorzugt ist.

Die erfindungsgemäß einzusetzenden Terpolymere enthalten die konjugierten Diene in Mengen von etwa 40 bis 89 Gew.-%, die vinylaromatischen Verbindungen in Mengen von etwa 10 bis 40 Gew.-% und die olefinisch ungesättigten Nitrile in Mengen von etwa 1 bis 50 Gew.-%, wobei sich die Menge der einzelnen Komponenten zu 100 Gew.-% ergänzen.

Bevorzugt werden die konjugierten Diene in Mengen von 40 bis 80 Gew.-% eingesetzt, die vinylaromatischen Verbindungen in Mengen von 10 bis 35 Gew.-% und die olefinisch ungesättigten Nitrile in Mengen von 10 bis 40 Gew.-%.

In Abhängigkeit der Mengen der eingesetzten Aufbaukomponenten beträgt die Glasübergangstemperatur der erfindungsgemäß eingesetzten Terpolymere etwa -60 bis 0°C, bevorzugt -45 bis -15°C.

Die erfindungsgemäß eingesetzten NSBR-Terpolymere sind beispielsweise aus den zuvor genannten Patentveröffentlichungen bekannt, ebenso wie deren Herstellung.

Wie erwähnt, ist es für die physikalischen Eigenschaften der erfindungsgemäßen Kautschukmischungen bzw. den daraus hergestellten Vulkanisate bzw. Formkörper von besonderer Bedeutung, dass den Kautschukmischungen polare synthetische Weichmacher zugesetzt werden. Als polare synthetische Weichmacher kommen solche in Betracht, die z.B. Ester- oder Ethergruppen im Molekül enthalten, beispielsweise Phthalate, wie Dibutyl-phthalate (DBP), Dioctyl-phathalate (DOP), Diisononyl-phthalate (DINP), Diisodecyl-phthalate (DIDP), Diisotridecyl-phthalate (DTDP), Diundecyl-phthalate (DUP), Sebacate, wie Dioctyl-sebacate (DOS), Dibutyl-sebacate (DBS), Adipate, wie Dioctyl-adipate (DOA), Diisodecyl-adipate (DIDA), Diisononyl-adipate (DINA), Di-(butoxy-ethoxy-ethyl)-adipate, Phosphorsäureester, wie Trikresyl-phosphate (TCP), Trixylyl-phosphate (TXP), Trioctyl-phosphate (TOF), Diphenylkresyl-phosphate, Diphenyloctyl-phosphate, Trichloroethyl-phosphate, Stearate, wie Butylstearat, Azelate, wie Dioctyl-azelate, Oleate, wie Dibutyl-oleat, Trimellitate, wie Trioctyl-melliat, Tri-linear-C₇-C₉-trimelliate, Glykolate, wie Dibutylmethylen-bis-thioglykolate, Di-2-ethyl-hexyl-ester-thiodiglykolate, Nylonate, wie Dioctyl-nylonat, Diisodecyl-nylonat, Phenylalkyl-sulfonsäureester, Butyl-carbitolformal, sowie gemischte Ester der Adipin-, Glutar- und Succinsäure.

Als polare Weichmacher kommen darüber hinaus noch in Frage: chlorinierte Paraffine mit einem Chlorgehalt von 40 bis 70 Gew.-% sowie Weichmacher auf Epoxyester-Basis, auf Polyester- und Polyether-Basis, auf Ether-thioether-Basis sowie auf Basis von Phenolsulfonsäurestern.

Die polaren synthetischen Weichmacher können sowohl einzeln als auch im Gemisch untereinander eingesetzt werden. Das günstigste Mischungsverhältnis richtet sich nach dem jeweiligen Einsatzzweck der erfindungsgemäßen Kautschukmischungen.

Bevorzugt sind Weichmacher auf Basis von Phthalsäure, Sebacinsäure und Adipinsäure der oben genannten Art.

Selbstverständlich können die erfindungsgemäßen Kautschukmischungen neben den polaren synthetischen Weichmachern noch die bekannten Füllstoffe und Kautschukhilfsmittel enthalten, wie Pigmente, Zinkoxyd, Stearinsäure, Vulkanisationsbeschleuniger, Vulkanisationsmittel beispielsweise auf Schwefel- und Peroxydbasis, Stabilisatoren, Antioxidantien, Harze, Öle, Wachse sowie Inhibitoren.

Als Füllstoffe für die erfindungsgemäßen Kautschukmischungen eignen sich sowohl die bekannten Ruße und Kieselsäuren als auch Silikate, Titandioxid, Kreide oder Clay oder Mischungen derselben. Bevorzugt werden als Füllstoffe Ruß und Kieselsäure eingesetzt.

Bei Einsatz von Kieselsäuren in den Kautschukmischungen können noch in bekannter Weise sogenannte Füllstoffaktivatoren, wie Bis-3-(triethoxysilylpropyl)-tetrasulfit, zugesetzt werden.

Die genannten Zusatz- bzw. Hilfsmittel sind dem Fachmann ebenfalls bekannt und unter anderem beschrieben in Kautschuk-Technology von Werner Hoffmann, Habilitationsschrift der Fakultät für Maschinenwesen, TH Aachen, 1975; Handbuch für die Gummiindustrie bei Bayer AG Leverkusen, Hoffmann, W.: Kautschuktechnology Stuttgart (Genter 1980) sowie in Helle Füllstoffe in Polymeren, Gummi Faser Kunststoffe 42 (1989) Nr. 11.

Die Füllstoffe und die erwähnten Kautschukhilfsmittel werden in den üblichen Mengen eingesetzt. Die jeweils günstigen Mengen richten sich u.a. nach dem vorgesehenen Verwendungszweck der Kautschukmischungen und können leicht durch entsprechende Vorversuche bestimmt werden.

Selbstverständlich können den erfindungsgemäßen Kautschukmischungen noch andere natürliche (NR) sowie synthetische Kautschuke zugesetzt werden, wie beispielsweise Polybutadien (BR), Styrol-Butadien-Copolymere (SBR), Polyisoprenkautschuke (IR), Isopren-Butadien-Kautschuke, Isopren-Butadien-Styrolkautschuke, Ethylen-Propylen-Kautschuke. Bevorzugt werden eingesetzt Polybutadien, Styrol-Butadien-Copolymere sowie natürliche Kautschuke. Die in den erfindungsgemäßen Kautschukmischungen eingesetzten, erwähnten zusätzlichen Kautschuke können selbstverständlich auch - wie üblich - mit Ölen auf aromatischer, naphtenischer oder paraffinischer Basis versetzt sein.

Die zusätzlich einzusetzenden Kautschuke werden in üblicherweise durch radikalische Emulsionspolymerisation, radikalische Lösungspolymerisation, anionischer oder kationischer Polymerisation oder durch Ziegler-Natta-Polymerisation in bekannter Weise hergestellt.

Die Menge der zugesetzten zusätzlichen Kautschuke kann in weiten Bereichen variiert werden und richtet sich vor allem nach dem späteren Verwendungszweck der erfindungsgemäßen Kautschukmischungen auf Basis von NSBR und synthetischen Weichmachern.

Im Allgemeinen werden die genannten, zusätzlichen Kautschuke in Mengen von 1 bis 99, bevorzugt 10 bis 90, ganz besonders bevorzugt 20 bis 80 Gew.-%, bezogen auf die Menge des gesamten Kautschuks, eingesetzt.

Die erfindungsgemäßen Kautschukmischungen können hergestellt werden, indem man die einzelnen Komponenten in geeigneten Mischaggregaten, wie Walzen oder Knetern, intensiv miteinander mischt.

Bevorzugt werden die erfindungsgemäßen Kautschukmischungen hergestellt, indem man die Komponente a), d.h. das Terpolymer (NSBR) in Latexform mit dem oder den polaren synthetischen Weichmachern (Komponente b)) mischt und das dabei erhaltene Gemisch durch Koagulation und anschließender Trocknung entsprechend aufarbeitet.

Der Zusatz der Weichmacher zum NSBR-Latex kann durch einfaches Mischen der beiden Komponenten erfolgen. Auch ist es möglich, den Weichmacher in Form einer wässrigen Emulsion dem Latex zuzusetzen, wobei übliche, bekannte Emulgatoren zugesetzt werden. Es ist dabei möglich, solche Emulgatoren zu verwenden, die auch bei der Herstellung des Latex eingesetzt wurden. Selbstverständlich ist auch die Verwendung anderer Emulgatoren möglich.

Die Herstellung der NSBR-Latex/Weichmacher-Mischung kann bei Raumtemperatur, aber auch bei höherer Temperatur erfolgen, insbesondere dann, wenn der zuzusetzende Weichmacher eine hohe Viskosität aufweist.

Die Koagulation der Latex/Weichmacher-Mischung kann durch bekannte und übliche Verfahren erfolgen. Beispiele hierzu sind das Einbringen von mechanischer Energie, wobei die Koagulation durch Scherung erfolgt, durch Anwendung rein thermischer Verfahren oder durch den Zusatz von Fällmitteln, wie Alkali-, Erdalkalioder Alumininiumsalze oder anorganischer oder organischer Säuren, wobei die Verwendung von Fällhilfsmitteln, wie Gelatine und/oder Polyelektrolyte zusätzlich möglich ist. Bevorzugt ist die Verwendung von Fällmitteln der genannten Art.

In bekannter Weise kann die koagulierte Mischung einem oder mehreren Waschschritten unterzogen werden, wobei vor der Trocknung der koagulierten Mischung eine Vorentwässerung in dafür geeigneten Apparaten, beispielsweise in einer Entwässerungsschnecke, möglich ist.

Den erhaltenen koagulierten und getrockneten Kautschukmischungen können dann die oben beschriebenen Füllstoffe und Kautschukhilfsmittel in bekannter Art und Weise zugemischt werden.

Die erfindungsgemäßen Kautschukmischungen können in üblicher Weise vulkanisiert werden, wobei sich das zweckmäßigste Vulkanisationsverfahren nach dem jeweiligen Anwendungszweck der Kautschukmischungen richtet.

Die erfindungsgemäßen Kautschukmischungen können zur Herstellung von Vulkanisaten aller Art verwendet werden, insbesondere zur Herstellung von Reifenbauteilen und zur Herstellung von technischen Gummiwaren, wie Riemen, Dichtungen und Schläuchen.

Bevorzugt ist die Verwendung der erfindungsgemäßen Kautschukmischungen im Reifenbau, insbesondere für Reifenlaufflächen.

In den folgenden Beispielen wurden die Eigenschaften der erfindungsgemäßen Kautschukmischungen der Vergleichskautschukmischungen und der resultierenden Vulkanisate wie folgt gemessen:
- (1): Die Polymerzusammenstellung wurde mittels IR-Spektroskopie gemessen.
- (2): Die Mooneyviskosität der Kautschuke wurde nach DIN 53523 ermittelt.
- (3): Die Zugfestigkeit der Vulkanisate wurde nach DIN 53504 ermittelt.
- (4): Die Bruchdehnung der Vulkanisate wurde nach DIN 53504 ermittelt.
- (5): Der Modul der Vulkanisate bei 100 und 300 % Dehnung wurde nach DIN 53504 ermittelt.
- (6): Die Härte der Vulkanisate bei 70°C wurde nach DIN 53505 ermittelt.
- (7): Der Abrieb der Vulkanisate wurde nach DIN 53516 ermittelt.
- (8): Die tan δ der Vulkanisate wurde nach DIN 53513 ermittelt.

### Beispiele

Folgende Komponenten wurden für die Vergleichskautschukmischung 1 und 2 sowie die erfindungsgemäßen Kautschukmischungen 1, 2 und 3 verwendet:
NSBR (durch Emulsionspolymerisation hergestellter Kautschuk, 58,5 % Butadien, 20,3 % Styrol und 21,1 % Acrylnitril, Mooney-Viskosität 49),
   Krylene® 1500 (Emulsions-SBR, 23,5 % Styrol, Hersteller Bayer Elastomeres),
   NR (Naturkautschuk TSR 5, cis 1,3-Polyisopren),
   Renopal® 450 (aromatischer Mineralöl-Weichmacher, Hersteller Fuchs Chemie),
   Corax® N339 (Ruß, Hersteller Degussa Hüls AG),
   Stearinsäure,
   ZnO (Zinkoxid),
   Schwefel,
   Vulkanox® 4010 (N-Isopropyl-N'-phenyl-p-phenylendiamin, Hersteller Bayer AG),
   Vulkanox® 4020 (N-(1,3-Dimethylbutyl)-N'-phenyl-p-phenylendiamin, Hersteller
   Bayer AG),
   Vulkacit® D (Diphenylguanidin, Hersteller Bayer AG),
   Vulkacit® CZ/C (N-Cyclohexyl-2-benzothiazyl-sulfenamid, Hersteller Bayer AG),
   DOP: Vestinol AH, (Dioctylphthalat, Hüls AG),
   DOS: Edenol 888, (Dioctylsebacat, Henkel KGaA).

Die einzelnen Gewichtsanteile der Komponenten sind in den Tabelle 1 und 2 aufgeführt.

Die Komponente wurden in einem Kneter (Werner & Pfleiderer GK 1.5) bei 50 UpM gemischt. Die Knetertemperatur betrug 60°C. Die Vulkanisationsbeschleuniger wurden auf einer Walze zugemischt.

Die Ergebnisse der Prüfungen sind in Tabelle 1 und 2 aufgeführt.

**Tabelle 1**

| | Beispiel 1 | Beispiel 2 | Vergleichsbeispiel 1 |
|---|---|---|---|
| Krylene® 1500 | 80 | 80 | 80 |
| NSBR 20 % ACN | 20 | 20 | 20 |
| Corrax® N339 | 50 | 50 | 50 |
| Aromatic Oil | 15 | 15 | 30 |
| DOP | 15 | 0 | 0 |
| DOS | 0 | 15 | 0 |
| Stearinsäure | 2 | 2 | 2 |
| Zinkoxide | 3 | 3 | 3 |
| Vulkanox® 4010 | 1 | 1 | 1 |
| Vulkanox® 4020 | 1 | 1 | 1 |
| Schwefel | 2 | 2 | 2 |
| Vulkacit® CZ/C | 1,5 | 1,5 | 1,5 |
| Vulkacit® D | 0,2 | 0,2 | 0,2 |
| | | | |
| Zugfestigkeit (MPa) | 21,1 | 20,6 | 21,1 |
| Bruchdehnung (%) | 635 | 625 | 640 |
| Modul 100% (MPa) | 1,5 | 1,5 | 1,6 |
| Modul 300 % (MPa) | 6,6 | 6,7 | 6,5 |
| Härte 23°C (Shore A) | 57 | 55 | 57 |
| Härte 70°C (Shore A) | 51 | 51 | 51 |
| DIN Abrieb 60er (mm³) | 130 | 115 | 140 |
| tan δ 0°C | 0,477 | 0,496 | 0,463 |
| 23°C | 0,278 | 0,273 | 0,339 |
| 60°C | 0,193 | 0,187 | 0,216 |
| E* 0°C | 19,489 | 16,723 | 62,777 |
| 23°C | 8,573 | 7,376 | 10,555 |
| 60°C | 5,424 | 5,438 | 5,727 |
| E' 0°C | 17,589 | 14,983 | 56,973 |
| 23°C | 8,261 | 7,115 | 9,995 |
| 60°C | 5,326 | 5,346 | 5,598 |
| E" 0°C | 8,394 | 7,429 | 26,365 |
| 23°C | 2,294 | 1,945 | 3,391 |
| 60°C | 1,025 | 1 | 1,209 |

Die Ergebnisse in Tabelle 1 zeigen, dass die erfindungsgemäßen Kautschukmischungen gegenüber dem Stand der Technik bei vergleichbaren mechanischen Eigenschaften Vorteile in den Eigenschaften wie deutlich niedrige dynamische Moduli, höhere tan δ-Werte bei 0°C (bessere Nassrutschfestigkeit), niedrige tan δ-Werte bei 60°C (geringerer Rollwiderstand) und geringerer DIN Abrieb (geringerer Verschleiß) zeigen.

**Tabelle 2**

| | Beispiel 3 | Vergleichsbeispiel 2 |
|---|---|---|
| NR (mastiziert) | 80 | 80 |
| NSBR 20 % ACN | 20 | 20 |
| Corrax® N339 | 50 | 50 |
| Aromatic Oil | 15 | 30 |
| DOP | 15 | 0 |
| Stearinsäure | 2 | 2 |
| Zinkoxide | 3 | 3 |
| Vulkanox® 4010 | 1 | 1 |
| Vulkanox® 4020 | 1 | 1 |
| Schwefel | 2 | 2 |
| Vulkacit® CZ/C | 1,5 | 1,5 |
| Vulkacit® D | 0,2 | 0,2 |
| | | |
| Zugfestigkeit (MPa) | 23,8 | 23,5 |
| Bruchdehnung (%) | 615 | 610 |
| Modul 100 % (MPa) | 1,8 | 1,8 |
| Modul 300 % (MPa) | 7,7 | 7,1 |
| Härte 23°C (Shore A) | 59 | 59 |
| Härte 70°C (Shore A) | 51 | 51 |
| DIN Abrieb 60er (mm³) | 130 | 130 |
| tan δ 0°C | 0,424 | 0,452 |
| 23°C | 0,243 | 0,3 |
| 60°C | 0,155 | 0,178 |
| E* 0°C | 13,039 | 37,024 |
| 23°C | 6,777 | 7,847 |
| 60°C | 4,808 | 4,911 |
| E' 0°C | 12,006 | 33,738 |
| 23°C | 6,586 | 7,515 |
| 60°C | 4,751 | 4,835 |
| E" 0°C | 5,088 | 15,248 |
| 23°C | 1,599 | 2,257 |
| 60°C | 0,738 | 0,86 |

Die Ergebnisse in Tabelle 2 zeigen, dass die erfindungsgemäßen Kautschukmischungen gegenüber dem Stand der Technik bei vergleichbaren mechanischen Eigenschaften Vorteile in den Eigenschaften wie deutlich niedrige dynamische Moduli, und niedrigere tan δ-Werte bei 60°C (geringerer Rollwiderstand) zeigen.

### Beispiel 4 (Herstellung der erfindungsgemäßen Kautschukmischungen nach dem Latexverfahren)

### Herstellung des Terpolymeren

In einen evakuierten, rührbaren 20 1 Stahlreaktor wurden 1631,3 g Styrol, 7,31 g tert. Dodecylmercaptan, 900 g Acrylnitril und eine Lösung bestehend aus 7537,4 g vollentsalztem Wasser, 197,68 g disproportionierte Harzsäure (Natriumsalz, 70%ig), 2175 g teilhydrierte Talgfettsäure (Kaliumsalz, 9 %ig), 14,06 g Kaliumhydroxid (85 %ig), 32,06 g kondensierte Naphthalinsulfonsäure (Na-Salz) und 14,63 g Kaliumchlorid vorgelegt. Alle Komponenten wurden vorher mit Stickstoff gespült. Dann wurden 4162,50 g Butadien zugegeben und die Emulsion unter Rühren auf 10°C temperiert. Durch Zugabe von 1,52 g p-Menthanhydroperoxid (50 %ig) und einer Lösung bestehend aus 167.91 g vollentsalztes Wasser, 1,69 g EDTA, 1,35 g Eisen(II)-sulfat * 7 H₂O, 3,46 g Natriumformaldehydsulfoxylat und 5,23 g Natriumphosphat * 12 H₂O wurde die Polymerisation gestartet und unter Rühren bei 10°C fortgesetzt.

Bei einem Umsatz von 80,2 % wurde die Polymerisation durch Zugabe von 22,5 g Diethylhydroxylamin (25 %ig) und 1,13 g Natriumdithionit abgestoppt. Der Latex wurde mit 13,50 g Vulkanox® BKF (2,2'-Methylen-bis-(4-methyl-6-tert.-butylphenol, Produkt der Firma Bayer AG Leverkusen), zugegeben als 46 %ige Dispersion (29,35 g), versetzt. Das nichtumgesetzte Butadien wurde entgast und die nicht umgesetzten Monomeren mittels Dampf aus dem Latex entfernt. Eine kleine Probe wurde koaguliert und das Polymere getrocknet. Das Polymere wies eine Mooney-Viskosität (ML1+4) von 151 auf. Mittels IR-Spektroskopie wurde die Polymerzusammensetzung mit 57,4 % Butadien, 22,7 % Styrol und 19,9 % Acrylnitril gemessen. Der Gelgehalt in Toluol betrug 2,2 %.

### Herstellung der Latex-Weichmacher-Mischung

3200 g des Latex, entsprechend 1100 g Polymer wurde mit 275 g DOP (25 phr) versetzt. Hierzu wurde das DOP in einer wässrigen Lösung bestehend aus 340,93 g Wasser, 0,41 g Polynaphthalinsulfonsäure, 59,54 g dispropotionierte Harzsäure, Natriumsalz (10 %ig) und 11,62 g teilhydrierte Talgfettsäure (Kaliumsalz, 9 %ig) unter Rühren emulgiert. Latex und DOP-Emulsion wurden auf 60°C erwärmt und unter Rühren vermischt. Es wurde 30 Minuten gerührt.

### Koagulation der Latex-Weichmacher-Mischung

In einem gerührten Kessel wurden vorgelegt 10 kg 65°C warmes, vollentsalztes Wasser, 825 g Natriumchlorid und 2,25 g Polyamin (Superfloc® C567). Bei 65°C wurde unter. Rühren die Latex-Weichmacher-Mischung zugegeben. Dabei wurde der pH-Wert des Fällserums durch Zugabe von 10 % iger Schwefelsäure auf 4 eingestellt und gehalten.

Das Fällserum war klar. Der DOP-verstreckte Kautschuk wurde abfiltriert und mit 65°C warmem, vollentsalztem Wasser unter Rühren 15 Minuten gewaschen. Das Wasser : Kautschuk-Verhältnis betrug 10:1. Der feuchte, DOP-verstreckte Kautschuk wurde bei 70°C im Vakuumtrockenschrank getrocknet. Die Mooney-Viskosität (ML1+4) betrug 66 ME.

Die Beispiele 5 bis 7 wurden in gleicher Weise hergestellt. Tabelle 1 gibt einen Überblick über die erfindungsgemäß hergestellten Masterbatches.

**Tabelle 3**

| Weichmacher | Beispiel 4 | Beispiel 5 | Beispiel 6 | Beispiel 7 |
|---|---|---|---|---|
| DOP | 25 phr | | | |
| DOP | | 50 phr | | |
| DOS | | | 37,5 phr | |
| TKP | | | | 37,5 phr |
| ML 1+4 | 66 | 34 | 47 | 100 |
| des Masterbatches | | | | |

### Prüfung der Beispiele und Vergleichsbeispiele

Folgende Komponenten wurden für die Vergleichskautschukmischungen und die erfindungsgemäßen Kautschukmischungen verwendet:
Masterbatches der Beispiele 4 bis 7
   NSBR (durch Emulsionspolymerisation hergestellter Kautschuk, 58,5 % Butadien, 20,3 % Styrol und 21,1 % Acrylnitril, Mooney-Viskosität 49),
   SBR 1500 (Krylene® 1500, Emulsions-SBR, 23,5 % Styrol, Hersteller Bayer Elastomeres),
   Renopal® 450 (aromatischer Mineralöl-Weichmacher, Hersteller Fuchs Chemie),
   Corax® N339 (Ruß, Hersteller Degussa Hüls AG),
   Stearinsäure,
   ZnO (Zinkoxid),
   Schwefel,
   Vulkanox® 4010 (N-Isopropyl-N'-phenyl-p-phenylendiamin, Hersteller Bayer AG),
   Vulkanox® 4020 (N-(1,3-Dimethylbutyl)-N'-phenyl-p-phenylendiamin, Hersteller Bayer AG),
   Vulkacit® D (Diphenylguanidin, Hersteller Bayer AG),
   Vulkacit® CZ/C (N-Cyclohexyl-2-benzothiazyl-sulfenamid, Hersteller Bayer AG),
   DOP: Vestinol AH, (Dioctylphthalat, Hüls AG),
   DOS: Edenol 888, (Dioctylsebacat, Henkel KGaA).
   TKP: Disflamoll TKP (Phosphorsäure-trikresylester, Bayer AG)

Die einzelnen Gewichtsanteile der Komponenten sind in den Tabellen 4 und 6 aufgeführt.

Die Komponenten wurden in einem Kneter (Werner & Pfleiderer GK 1.5) bei 50 UpM gemischt. Die Knetertemperatur betrug 60°C. Die Vulkanisationsbeschleuniger wurden später auf einer Walze zugemischt.

Die Ergebnisse der Prüfungen sind in Tabellen 5 und 7 aufgeführt.

**Tabelle 4**

| | Beispiel 4 | Beispiel 5 | Vergleichsbeispiel 1 |
|---|---|---|---|
| | DOP-25 5 DOP | DOP-50 10 DOP | |
| SBR 1500 | 80 | 80 | 80 |
| NSBR1 | 0 | 0 | 20 |
| Masterbatch mit 25 phr DOP | 25 | 0 | 0 |
| Masterbatch mit 50 phr DOP | 0 | 30 | 0 |
| arom. Mineralöl | 25 | 20 | 30 |
| DOP | 0 | 0 | 0 |
| Ruß N339 | 50 | 50 | 50 |
| Stearinsäure | 2 | 2 | 2 |
| Zinkoxid | 3 | 3 | 3 |
| Vulkanox 4010 NA | 1 | 1 | 1 |
| Vulkanox 4020 | 1 | 1 | 1 |
| Schwefel | 2 2 | 2 | 2 |
| Vulkacit CZ | 1,5 | 1,5 | 1,5 |
| Vukacit D | 0,2 | 0,2 | 0,2 |
| Gew.-Teile synthetischer Weichmacher in der Mischung, bezogen auf Kautschuk | 5 | 10 | 0 |

**Tabelle 5**

| Vulkanisateigenschaften | | Beispiel 4 | Beispiel 5 | Vergleichs-beispiel 1 |
|---|---|---|---|---|
| Zugfestigkeit | (Mpa) | 22,6 | 23,6 | 21,1 |
| Bruchdehnung | (%) | 622 | 620 | 640 |
| Modul 100% | (Mpa) | 1,67 | 1,66 | 1,6 |
| Modul 300% | (Mpa) | 7,32 | 7,99 | 6,5 |
| Härte bei 23°C | (Shore A) | 58 | 57 | 57 |
| Härte bei 70°C | (Shore A) | 51 | 51 | 51 |
| DIN Abrieb 60er | (mm3) | 133 | 104 | 140 |
| | | | | |
| tan δ 0 °C | | 0,567 | 0,556 | 0,463 |
| 23 °C | | 0,299 | 0,291 | 0,339 |
| 60 °C | | 0,190 | 0,187 | 0,216 |
| | | | | |
| E* 0 °C | | 30,770 | 22,060 | 62,777 |
| 23 °C | | 8,096 | 8,149 | 10,555 |
| 60 °C | | 4,934 | 5,121 | 5,2727 |
| | | | | |
| E' 0 °C | | 26,762 | 19,283 | 59,973 |
| 23 °C | | 7,757 | 7,823 | 9,995 |
| 60 °C | | 4,847 | 5,034 | 5,598 |
| | | | | |
| E " 0 °C | | 15,185 | 10,716 | 26,635 |
| 23 °C | | 2,320 | 2,279 | 3,391 |
| 60 °C | | 0,920 | 0,941 | 1,209 |

Die Ergebnisse in Tabelle 5 zeigen, daß die erfindungsgemäßen Masterbatches gegenüber dem Stand der Technik (Vergleichsbeispiel 1), bei teilweise verbesserten Zugfestigkeiten, Vorteile wie deutlich niedrige dynamische Moduli, höhere tan δ-Werte bei 0°C (bessere Naßrutschfestigkeit), niedrigere tan δ-Werte bei 60°C (geringerer Rollwiderstand) und geringeren DIN-Abrieb (geringerer Verschleiß) zeigen. Dies gilt auch für geringe Gehalte an polaren Weichmachern.

**Tabelle 6**

| | Beispiel 6 | Beispiel 7 | Vergleichsbeispiel 1 |
|---|---|---|---|
| | **DOS-37,5 7,5DOS** | **TKP-37,5 7,5 TKP** | |
| SBR 1500 | 80 | 80 | 80 |
| NSBR 1 | 0 | 0 | 20 |
| Masterbatch mit 37,5 phr DOS | 27,5 | 0 | 0 |
| Masterbatch mit 37,5 phr TPK | 0 | 27,5 | 0 |
| arom. Mineralöl | 22,5 | 22,5 | 30 |
| DOP | 0 | 0 | 0 |
| Ruß N339 | 50 | 50 | 50 |
| Stearinsäure | 2 | 2 | 2 |
| Zinkoxid | 3 | 3 | 3 |
| Vulkanox 4010 NA | 1 | 1 | 1 |
| Vulkanox 4020 | 1 | 1 | 1 |
| Schwefel | 2 | 2 | 2 |
| Vulkacit CZ | 1,5 | 1,5 | 1,5 |
| Vulkacit D | 0,2 | 0,2 | 0,2 |
| | | | |
| Gew.-Teile synthetischer Weichmacher in der Mischung, bezogen auf Kautschuk | 7,5 | 7,5 | 0 |

**Tabelle 7**

| Vulkanisateigenschaften | Beispiel 6 | Beispiel 7 | Vergleichsbeispiel 1 |
|---|---|---|---|
| Zugfestigkeit | 21,8 | 23,1 | 21,1 |
| Bruchdehnung | 627 | 656 | 640 |
| Modul 100% | 1,55 | 1,59 | 1,6 |
| Modul 300% | 7 | 6,9 | 6,5 |
| Härte bei 23°C | 56 | 56 | 57 |
| Härte bei 70°C | 50 | 50 | 51 |
| DIN Abrieb 60er | 125 | 135 | 140 |
| | | | |
| tan δ 0 °C | 0,552 | 0,584 | 0,463 |
| 23°C | 0,290 | 0,304 | 0,339 |
| 60 °C | 0,185 | 0,190 | 0,216 |
| | | | |
| E * 0 °C | 23,034 | 28,278 | 62,777 |
| 23 °C | 7,622 | 7,998 | 10,555 |
| 60 °C | 4,909 | 4,806 | 5,2727 |
| | | | |
| E' 0 °C | 20,168 | 24,417 | 59,973 |
| 23°C | 7,321 | 7,651 | 9,995 |
| 60 °C | 4,827 | 4,722 | 5,598 |
| | | | |
| E" 0 °C | 11,127 | 14,262 | 26,635 |
| 23 °C | 2,121 | 2,329 | 3,391 |
| 60 °C | 0,894 | 0,897 | 1,209 |

Die Ergebnisse in Tabelle 7 zeigen, daß die erfindungsgemäßen Masterbatches (Beispiele 6 und 7) enthaltend andere polare Weichmacher als die erfindungsgemäßen Masterbatches der Beispiele 4 und 5 dem Stand der Technik (Vergleichsbeispiel 1) überlegen sind.

## Patentansprüche

1. Kautschukmischungen enthaltend
a) wenigstens ein aus einem olefinisch ungesättigten Nitril, einer vinylaromatischen Verbindung und einem konjugierten Dien bestehenden Terpolymer (NSBR)
und
b) wenigstens einem polaren synthetischen Weichmacher,
wobei die Komponente b) in einer Menge von 0,5 bis 50 Gew.-%, bezogen auf die Menge des Terpolymeren (a), vorhanden ist.

2. Kautschukmischungen nach Anspruch 1, **dadurch gekennzeichnet, dass** sie wenigstens einen weiteren synthetischen oder natürlichen Kautschuk oder Mischungen derselben enthalten, wobei die Menge der zugesetzten Kautschuke 1 bis 99 Gew.-%, bezogen auf die Menge des gesamten Kautschuks, beträgt.

3. Verwendung der Kautschukmischungen nach Ansprüchen 1 und 2 zur Herstellung von Vulkanisaten aller Art, insbesondere zur Herstellung von Reifenbauteilen, sowie zur Herstellung von technischen Gummiwaren.

4. Herstellung der Kautschukmischungen nach Anspruch 1, **dadurch gekennzeichnet, dass** man die NSBR-Terpolymere in Latexform mit den polaren synthetischen Weichmachern mischt, die erhaltene Mischung gemeinsam koaguliert und anschließend trocknet.
